# EUROPÄISCHE PATENTSCHRIFT

(11) **EP 1 206 420 B1**
(45) Veröffentlichungstag und Bekanntmachung des Hinweises auf die Patenterteilung: **17.01.2007**
(21) Anmeldenummer: 00954598.9
(22) Anmeldetag: 08.08.2000
(51) Int. Cl.: C03B 5/225, C03B 5/20

(54) **VORRICHTUNG ZUM KONTINUIERLICHEN ERSCHMELZEN UND LÄUTERN VON ANORGANISCHEN VERBINDUNGEN, INSBESONDERE VON GLÄSERN UND GLASKERAMIKEN**
DEVICE FOR CONTINUOUSLY MELTING AND REFINING INORGANIC COMPOUNDS, ESPECIALLY GLASSES AND GLASS CERAMICS
DISPOSITIF PERMETTANT LA FUSION ET L'AFFINAGE EN CONTINU DE COMPOSES INORGANIQUES, NOTAMMENT DE VERRES ET DE VITROCERAMIQUES

(30) Priorität: 21.08.1999 DE 19939779
(43) Veröffentlichungstag der Anmeldung: 22.05.2002
(73) Patentinhaber: Schott AG, 55122 Mainz (DE)
(72) Erfinder: SCHMIDBAUER, Wolfgang, D-55126 Mainz (DE); RÖMER, Hildegard, D-61184 Karben (DE); RÄKE, Guido, D-55411 Bingen (DE); KIEFER, Werner, D-55126 Mainz (DE); KOHL, Michael, D-55218 Ingelheim (DE); LENTES, Frank-Thomas, D-55411 Bingen (DE)
(74) Vertreter: Dr. Weitzel & Partner
(86) Internationale Anmeldenummer: PCT/EP2000/007652
(87) Internationale Veröffentlichungsnummer: WO 2001/014267

(56) Entgegenhaltungen:
- US-A- 3 244 495
- US-A- 4 195 982
- PATENT ABSTRACTS OF JAPAN vol. 6, no. 180, 14. September 1982 (1982-09-14) -& JP 57 095834 A (NIHON ITA GLASS CO. LTD.), 14. Juni 1982 (1982-06-14)
- PETROV, YU.B. ET AL. : "continuous casting glass melting in a cold crucible induction furnace" XV INTERNATIONAL CONGRESS ON GLASS 1989, PROCEEDINGS, Bd. 3a, 1989, Seiten 72-77, XP000075308 leningrad, su

## Beschreibung

Die Erfindung betrifft eine Vorrichtung zum kontinuierlichen Erschmelzen und Läutern von anorganischen Verbindungen, insbesondere von Gläsern oder Glaskeramiken. Es kommen aber auch andere Substanzen in Betracht.

Es sind zahlreiche Vorrichtungen bekanntgeworden, mit denen die genannten Materialien erschmolzen oder geläutert werden können. Siehe z. B. DE 33 16 546 C1. Dabei handelt es sich um einen sogenannten Skulltiegel mit einer gekühlten Tiegelwandung, ferner mit einer Induktionsspule, die den Tiegel umgibt und über die Hochfrequenzenergie in den Tiegelinhalt einkoppelbar ist. Damit läßt sich der Tiegelinhalt auf außerordentlich hohe Temperaturen bringen, die bis zu 3000° C reichen.

Der Vorteil der Hochfrequenzbeheizung liegt darin, daß die Tiegelwand deutlich kälter sein kann, als die Glasschmelze. Die Kühlung der Tiegelwandung kann über Wärmeabstrahlung oder über aktive Luft- oder Wasserkühlung erfolgen. Beim Skulltiegel bildet sich im Wandbereich eine kalte Kruste aus arteigenem Material. Diese Kruste hat aufgrund der geringeren Temperatur eine sehr geringe elektrische Leitfähigkeit. Deshalb absorbiert sie keine Hochfrequenzenergie und bildet einen stabilen arteigenen Tiegel. Damit ist es möglich, nahezu beliebig hohe Schmelztemperaturen zu erreichen; es muß lediglich durch ausreichende Kühlung dafür gesorgt werden, daß die arteigene Wandung erhalten bleibt. Siehe beispielsweise EP 0 079 266.

Dem Schmelzprozess muß sich in der Regel ein Läuterprozess anschließen. Dabei hat das Läutern die Aufgabe, das erschmolzene Glas von physikalisch und chemisch gebundenen Gasen zu befreien. Der Läutervorgang wird durch besondere Läutermittel, wie beispielsweise NaCl unterstützt. Die Läutermittel tragen dazu bei, daß sich ausreichend große Gasblasen bilden, in die die Restgase aus der Schmelze eindiffundieren können.

In letzter Zeit hat sich in zunehmendem Maße die Forderung gestellt, den Vorgang des Erschmelzens einerseits sowie den Vorgang des Läuterns kontinuierlich zu betreiben. WO 92 15531 beschreibt eine Vorrichtung, bei welcher das Einschmelzen und das Läutern in ein und demselben Tiegel stattfinden. Die beiden Prozesse sind nicht unabhängig voneinander steuerbar, was der Glasqualität abträglich ist.

Die Vorrichtung läßt sich lediglich zur Herstellung von Gläsern mit geringeren Anforderungen an die Qualität verwenden. Außerdem ist die Läuterung bei dieser Vorrichtung wenig effektiv, weil ständig kaltes Ausgangsmaterial im Oberflächenbereich der Schmelze nachgeführt wird und die Oberfläche immer der kälteste Teil im Tiegel ist.

US 4 780 121 beschreibt eine Vorrichtung, bei der ein erstes Gefäß vorgesehen ist, in welchem das Gemenge erschmolzen wird, und eine zweites Gefäß, in welchem das Läutern der geschmolzenen Glasmasse durchgeführt wird. Die im Schmelztiegel erzeugte Glasschmelze wird von oben her dem Läutergefäß zugeführt. Dabei ist das keramische Läutergefäß von einer Induktionsspule umgeben, mittels welcher Hochfrequenzenergie in das Läutergefäß einkoppelbar ist. Wegen des keramischen Läutertiegels ist die Erzeugung hoher Temperaturen im Läutergefäß begrenzt. Das Läuterergebnis bei dieser Vorrichtung ist unbefriedigend. Auch nach dem Läutern verbleibt noch Gas in der Glasschmelze, und zwar in einem Maße, das die Qualität des Endproduktes in unanehmbarer Weise beeinträchtigt.

Ein weiterer Nachteil dieser Vorrichtung besteht in folgendem: um die Vorrichtung kontinuierlich betreiben zu können, muß der Durchsatz durch das Schmelzgefäß genauso groß sein, wie der Durchsatz durch das Läutergefäß. Der Ablauf der Prozesse in den beiden Gefäßen unterliegt aber unterschiedlichen Parametern. So muß die Temperatur im Läutergefäß dem Läutervorgang anpassbar sein. Sie ist somit nicht frei wählbar. Das mit dieser Vorrichtung durchführbare Verfahren hat den Nachteil, daß eine Regelung des Glasflusses nicht möglich ist. Nur durch Verändern der Ablauföffnung im Einschmelzaggregat kann auf den Glasstand Einfluß genommen werden. Eine Regelung oder auch nur Steuerung des Glasflusses aus dem HF-Bereich In ein Konditionierungsbecken unabhängig von der Läutertemperatur ist nicht möglich. Die Ausflußgeschwindigkeit ist von der Temperatur im HF-Tiegelbereich abhängig. Ändert sich die Temperatur Im HF-Bereich, so erhöht sich der Abfluß aufgrund der niedrigen Viskosität der Schmelze. Damit sind drastische Einschränkungen bezüglich der Möglichkeit der Temperaturvariation vorgegeben. Höhere Temperaturen im Läuterbereich können höchstens in Kombination mit einer Durchsatzsteigerung eingestellt werden. Damit wird der Vorteil der besseren Läuterung durch Temperaturerhöhung aufgrund der geringeren Aufenthaltsdauer zerstört. Weiterhin ist bei einem freien Glasfall in einen HF-Läuterteil nachteilig, daß dabei Blasen eingeschlagen werden können. Solche eingeschlagenen Luftblasen enthalten hohe Stickstoffanteile und sind somit nur sehr schwer auszuläutern. Dieses Problem gilt noch verstärkt beim Übergang vom HF-Bereich in den Homogenisierungsbereich. Hierbei eingeschlagene Blasen können die Schmelze nicht mehr verlassen, da keine Läuterung mehr stattfindet.

JP 57 095834 A beschreibt einen Quarzglasbahälter, in welchem maximal Schmelztemperaturen von 1500°C erreicht werden. Höhere Temperaturen sind mit einem solchen System im Dauerbetrieb über mehrere Wochen nicht möglich, da eine gewisse chemische Korrosion auftreten würde.

EP-B1-0 079 266 sowie US-A1-3 244 49 beschreiben weitere Vorrichtungen zum Schmelzen von Glas.

Petrov, YU. B. et al: "Continious casting glass melting in a cold crucible induction furncace" XV INTERNATIONAL CONGRESS ON GLASS 1989, PROCEEDINGS, Bd. 3a, 1989, Seiten 72-77, XP 000075308 Leningrad SU, welches Dokument als nächstliegender Stand der Technik betrachtet werden kann, offenbart eine einzige Wanne zum Einschmelzen und Läutern von Glas, bei welcher die Glasschmelze unter einer In der Wanne vorgesehenen Trennwand hindurch aus dem Schmelzbereich in den Läuterbereich eintritt.

Der Erfindung liegt die Aufgabe zugrunde, eine Vorrichtung anzugeben, bei welcher das Schmelzen einerseits und das Läutern andererseits jeweils in einem eigenen Gefäß durchgeführt werden, welche ferner im kontinuierlichen

Betrieb gefahren werden kann, und bei weicher insbesondere das Läutern zu einem einwandfreien Ergebnis führt, d. h. zu einer weitgehenden Entgasung.

Diese Aufgabe wird durch die Vorrichtung von Anspruch 1 sowie durch das Verfahren gemäß Anspruch 6 gelöst. Die abhängigen Ansprüche beschreiben vorteilhafte Weiterbildungen der Erfindung. Die Erfinder haben folgendes erkannt:
Wie oben ausgeführt, ist bei der Vorrichtung gemäß US 4 780 121 das Läutergefäß dem Schmelzgefäß nachgeschaltet, und dabei unter diesem angeordnet. Die flüssige Schmelze strömt somit dem Läutergefäß im freien Fall zu. Die zuströmende Schmelze ist verhältnismäßig kalt Die Oberfläche des Inhaltes des Läutergefäßes wird somit ständig von nachströmender, kalter Schmelze gebildet. Der größte Teil der kalten und damit schweren Glasschmelze fließt in die Mitte des Läutertiegels rasch zu dessen Ausfluß. Die Entgasung hingegen findet im Bodenbereich des Läutergefäßes statt, weil dort die Aufheizung durch die Induktionsspule in stärkerem Maße wirksam werden kann, als im Bereich der Oberfläche. Die Gasblasen bilden sich somit im Bodenbereich. Sie steigen zwar nach oben. Aufgrund der verhältnismäßig hohen Viskosität der kalten Schichten im Spiegelbereich werden die Gasblasen dort jedoch am Aufsteigen und am Verlassen der Schmelze gehindert. Dies bedeutet, daß Gas in unerwünschtem Maße in der im Läutergefäß enthaltenen Schmelze verbleibt.

Durch die Erfindung werden diese Nachteile vermieden. Die relativ kalte Schmelze tritt im unteren Bereich des Schmelzgefäßes aus, wird am Boden des Läutergefäßes in dieses eingeleitet und dort durch die HF-Energie erhitzt, Dabei bilden sich Blasen aus den In der Schmelze enthaltenen Gase. Die Blasen steigen nach oben. Da die oberen Schichten der Schmelze relativ heiß und damit von geringer Viskosität sind, können die Gasblasen die Schmelze problemlos verlassen.

Durch die Anwendung der Erfindung ist es möglich, den Inhalt eines hochfrequenzbeheizten Skull-Tiegels ohne keramischen Innentiegel auf Temperaturen in der Größenordnung von 2400 bis 2600° zu bringen, ja sogar auf 3000° C. Dies ist ganz besonders wichtig beim Läutern. Dabei wird das Glas von physikalisch und chemisch gebundenen Gasen befreit. Der Läutervorgang wird beim konventionellen Glasschmelzen durch Läutermittel wie Na₂SO₄, As₂O₃, Sb₂O₃ oder NaCl unterstützt. Diese Läutermittel zersetzen sich oder verdampfen bei Läutertemperatur und bilden Blasen, in die die Restgase aus der Schmelze eindiffundieren können. Die Läuterblasen müssen ausreichend groß sein, um in wirtschaftlich vertretbaren Zeitspannen in der Glasschmelze zur Oberfläche aufzusteigen und dort aufzuplatzen. Bei den genannten, hohen Temperaturen, die durch die Erfindung erreicht werden, ist die Aufstiegsgeschwindigkeit eine sehr hohe. So erhöht sich z. B. die Aufstiegsgeschwindigkeit bei einer Temperaturerhöhung von 1600° C auf 2400° C um den Faktor 100. Eine Blase mit einem Durchmesser von 0,1 mm steigt somit bei einer Temperatur von 2400° C ebenso schnell auf wie eine Blase mit einem Durchmesser von 1 mm bei einer Temperatur von 1600° C.

Durch die Erhöhung der Läutertemperatur wird bei den meisten Gasen die physikalische und chemische Löslichkeit erniedrigt und somit die Hochtemperatur-Läuterung zusätzlich unterstützt.

Alternativ zur Steigerung der Aufstiegsgeschwindigkeit von Blasen und damit zur Absenkung der Läuterzeit kann auf den Zusatz von Läutermitteln in mehr oder minder starkem Maße verzichtet werden. Voraussetzung ist aber, daß das aufsteigende Gas an die Oberfläche gelangen kann und daß die an der Oberfläche befindlichen Blasen aufplatzen und daß sich kein Schaum bildet.

Das erfindungsgemäße Prinzip hat aber einen weiteren Vorteil: dadurch, daß die Schmelze von unten her in das Läutergefäß strömt, im Bodenbereich, ist die Mantelfläche des Läutergefäßes weitgehend frei von Anschlüssen. Damit läßt sich die Induktionsspule ungehindert und ohne jegliche räumliche Rücksichten derart anordnen, daß sie die Mantelfläche des Läutergefäßes nach Belieben umgibt, so wie dies unter dem Gesichtspunkt des optimalen Einkoppelns von Hochfrequenzenergie wünschenswert ist.

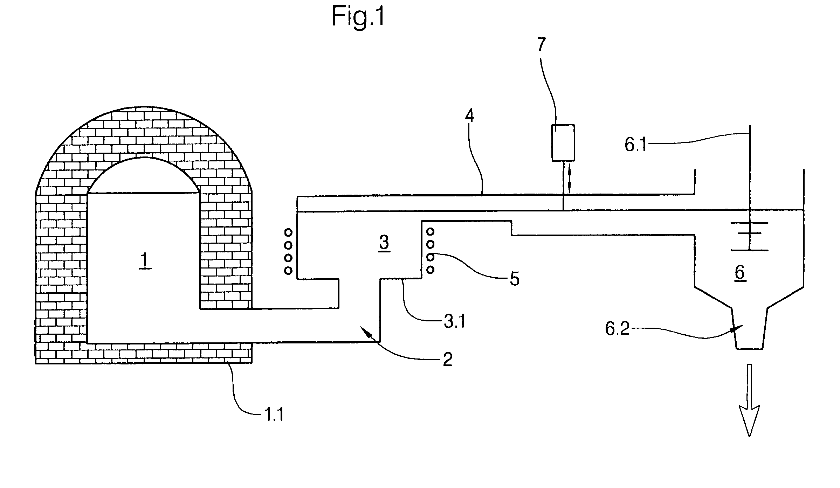

Die Erfindung ist anhand der Zeichnung näher erläutert.

Man erkennt ein Einschmelzgefäß 1. Dieses ist als gemauerte Wanne aus keramischem Material ausgebildet. Eine Verbindungsleitung 2 dient dazu, die im Einschmelzgefäß 1 erzeugte Glasschmelze einem Läutergefäß 3 zuzuführen. Dem Läutergefäß 3 ist eine Induktionsspule 5 zugeordnet. Die Induktionsspule 5 umgibt das Läutergefäß 3 in der Weise, daß die Windungen der Spule 5 die vertikale Achse des Läutergefäßes 3 im wesentlichen konzentrisch umgeben.

An das Läutergefäß 3 ist eine horizontale Rinne 4 angeschlossen. Sie dient dem Abkühlen der Schmelze. Die Abkühlung erfolgt hier von hohen Temperaturen, beispielsweise aus dem Bereich von 2400 bis 3000° C auf eine Temperatur von 1600° C. Die Abkühlrinne kann entweder aus einer Steinrinne oder Keramikrinne bestehen, die luft- oder wassergekühlt ist, oder aus einer hochfrequenzbeheizten Skullrinne. In der Abkühlrinne kann eine Nachläuterung und die Resorption der Restblasen erfolgen.

Die Schmelze kann in der Abkühlrinne 4 insbesondere von der Läutertemperatur im Läutergefäß 3 auf 1500°C bis 1550°C - bel einem Platln-Abstehteil - bzw. auf 1500°C bis 1850°C - bei einem Abstehteil aus keramischem Material - abgekühlt werden.

Am Ende der Rinne befindet sich zur Homogenisierung der Schmelze ein Rührtlegel 6 mit einem Rührer 6.1. Die Schmelze wird über einen Spelser 6.2 dem Rührtiegel 6 entnommen, um dem Formgebungsprozess zugeführt zu werden. Der Rinne 4 ist ein Glasstandsmesser 7 zugeordnet, mit welchem die geodätische Höhe des Spiegels der Glasschmelze in der Rinne 4 erfaßt werden kann.

Das Einschmelzen im Einschmelzgefäß 1 kann sowohl elektrisch als auch mit Brennern oder durch Kombination der beiden Mittel erfolgen. Im Bereich des Schmelzgefäßes erfolgt die sogenannte Rauhschmelze.

Die Verbindungsleitung 2 besteht entweder aus einem widerstandsbeheizten Platinrohr oder aus Feuerfestmaterial. Besteht die Verbindungsleitung 2 aus Feuerfestmaterial, so wird die Glasschmelze durch Einsatz von Elektroden direkt beheizt. Alternativ kann die Beheizung auch von außen erfolgen.

Wie man sieht, ist die Verbindungsleitung 2 im unteren Bereich an das Einschmelzgefäß 1 angeschlossen. Sie tritt durch den Boden 3.1 des Läutergefäßes 3 in dieses ein. Dabei wird die Glasdichtheit an der Verbindungsstelle durch eine ringförmig angeordnete Wasser- oder Luftkühlung erreicht. Diese Dichtung, die in der Regel aus Platin besteht, dient auch gleichzeitig als Hochfrequenz-Abschirmung. Sie ist nämlich elektrisch auf Erdpotential gelegt. Dadurch wird verhindert, daß Hochfrequenz-Streustrahlung durch die Verbindungsleitung 2 und durch die Elektroden aus dem Hochfrequenzbereich herausgeführt werden kann, und daß dort die Regelung und Steuerung anderer elektrischer Komponenten gestört wird. Bei Bedarf können Glasdichtung und elektrische Erdung auch voneinander getrennt aufgebaut werden.

Das Läutergefäß 3 selbst ist modular und damit sehr flexibel aufgebaut. Es besteht aus mehreren Segmenten mit mäanderförmig geführten, wassergekühlten Kupfer- oder Edelstahlrohren. Die Segmente sind im Bodenbereich elektrisch kurzgeschlossen, um bei sehr hohen Schmelztemperaturen eine Lichtbogenbildung zwischen den Segmenten zu verhindern. Dies kann beispielsweise dann auftreten, wenn die Isolationskruste des arteigenen Materials sehr dünn wird. Ein Kurzschluß wäre auch im oberen Bereich des Läutergefäßes 3 denkbar. Nachteilig ist dabei die Verdrängung des Hochfrequenzfeldes in den unteren Läutergefäßbereich, weil dies zu einer Abkühlung der Schmelzoberfläche führen kann.

Bei Läutertemperaturen bis 1650° C kann die Läuterwanne auch aus einem keramischen Material bestehen. In das keramische Material darf aber die Hochfrequenz nicht einkoppeln, da sonst die Wanne von der Hochfrequenz aufgeschmolzen wird. Keramische Wannen haben den Nachteil, daß sich durch Wärmeabstrahlung die Luft zwischen der Wanne und den Hochfrequenzspulen so weit erhitzen kann, daß es zu einem Überschlag kommt. Für Läutertemperaturen über 1650° C ist der Skull-Tiegel meist vorteilhafter, da hierbei die Tiegelwand intensiv durch wasser- oder luftgekühlte Metallrohre gekühlt werden kann. Mit dem Skull-Tiegel lassen sich nahezu beliebig hohe Läutertemperaturen erreichen, da die maximale Läutertemperatur nicht durch die Tiegelkorrosion begrenzt wird.

Das Schmelzvolumen des Läutergefäßes 3 wird derart gewählt, daß die Verweildauer für das geforderte Läuterergebnis gerade ausreichend ist. Aus energetischer Sicht ist jede Überdimensionierung zu vermeiden. Die Kühlung der damit verbundenen, größeren Wandverluste muß nämlich durch zusätzliche Hochfrequenzleistung kompensiert werden. Für Aluminosilikatgläser hat sich z. B. gezeigt, daß zur Läuterung eine Verweildauer von 30 - 60 min bei Läuterungstemperaturen von zum Beispiel 2200° C ausreichend ist.

Das Einschmelzgefäß ist, wie oben ausgeführt, aus Feuerfestmaterial gemauert. Stattdessen könnte es auch als Skulltiegel ausgeführt sein. Es hat dann denselben Aufbau, wie das hier beschriebene Läutergefäß mit einer Induktionsspule zum Einkoppeln von Hochfrequenzenergie in den Gefäßinhalt.

Durch den Aufbau nach dem Prinzip kommunizierender Röhren ist die Glasstandsregelung sehr einfach. Die Messung des Glasstands erfolgt im konventionellen Schmelzbereich der Rinne (kurz vor dem Rührer). Da alle Komponenten miteinander verbunden sind, ist damit der Glasstand im gesamten Schmelzaggregat bekannt. Die Meßgröße vom Wannenende kann zur Steuerung des gesamten Glasstands - von der Einschmelzwanne, über das HF-Läuterteil bis zur Rinne verwendet werden.

Diese einfache Steuerung des Glasstandes ist möglich, da es hier gelungen ist, den HF-Läuterteil in das System der Wanne als kommunizierendes Bauteil zu integrieren. Der Durchsatz kann vollkommen unabhängig von der HF-Läutertemperatur und der Viskosität im Läuteraggregat geregelt werden.

Am Ende der Rinne befindet sich zur Homogenisierung der Schmelze ein Rührtiegel (6). Über einen Speiser (7) wird das Glas aus der Wanne entnommen und dem Formgebungsprozeß zugeführt.

Zum Schutz vor Abstrahlung der von der Hochfrequenzeinrichtung erzeugten elektromagnetischen Felder können das Schmelzgefäß (1) und/oder das Läutergefäß (3) innerhalb eines leitfähigen Käfigs angeordnet werden.

## Patentansprüche

1. Vorrichtung zum kontinuierlichen Erschmelzen und Läutern von anorganischen Verbindungen, insbesondere von Gläsern oder Glaskeramiken;
1.1 mit einem Einschmelzgefäß (1);
1.2 mit einem Läutergefäß (3), das als Skull-Tiegel aufgebaut ist;
1.3 dem Läutergefäß (3) ist eine Induktionsspule (5) zugeordnet, die dem Einkoppeln von Hochfrequenzenergie in den Gefäßinhalt dient, und die die Wandung des Läutergefäßes (3) umgibt;
1.4 mit einer Verbindungsleitung (2), die dem Überführen von Schmelze vom Einschmelzgefäß (1) in das Läutergefäß dient; gekennzeichet durch die folgenden Merkmale:
1.5 die Verbindungsleitung (2) tritt im Bodenbereich des Einschmelzgefäßes (1) aus diesem aus, und von unten durch den Boden (3.1) des Läutergefäßes in dieses ein, wobei das Einschmelzgefäß (1) und das Läutergefäß (3) jeweils als eigenes Gefäß ausgeführt sind.

2. Vorrichtung nach Anspruch 1, **dadurch gekennzeichnet, daß** die Verbindungsleitung (2) aus dem Bodenbereich (1.1) das Einschmelzgefäßes (1) seitlich austritt.

3. Vorrichtung nach Anspruch 1 oder 2, **dadurch gekennzeichnet, daß** dem Läutergefäß (3) eine Abkühlrinne (4) nachgeschaltet ist.

4. Vorrichtung nach Anspruch 3, **dadurch gekennzeichnet, daß** der Abkühlrinne (4) ein Rührtlegel (6) nachgeschaltet Ist.

5. Vorrichtung nach einem der Ansprüche 1 bis 4, **dadurch gekennzeichnet, daß** das Schmelzgefäß (1) und/oder das Läutergefäß (3) innerhalb eines leitfähigen Abschirmkäfigs angeordnet sind.

6. Verfahren zum Betreiben einer Vorrichtung gemäß einem der Ansprüche 1 bis 5, **dadurch gekennzeichnet, daß** die Schmelze kontinuierlich aus dem Einschmelzgefäß (1) von unten her durch den Boden dem Läutergefäß (3) zugeführt wird, und Im oberen Bereich aus dem Läutergefäß über eine Abkühlrinne (4) in einen Rührtiegel (6) fließt

7. Verfahren nach Anspruch 6, **dadurch gekennzeichnet, daß** der Schmelzensplegel im Einschmelzgefäß (1), im Läutergefäß (3), in der Abkühlrinne (4) sowie im Rührtiegel (6) nach Art kommunizierender Röhren sich auf ein und demselben Niveau befindet.

8. Verfahren nach einem der Ansprüche 6 oder 7, **dadurch gekennzeichnet, daß** das Einschmelzgefäß (1) aus keramischem Steinmaterial, aus Platin oder aus einer Platinlegierung erstellt ist.

9. Verfahren nach einem der Ansprüche 6 bis 8, **dadurch gekennzeichnet, daß** das Einschmelzgefäß (1) aus einem sogenannten Skulltiegel besteht, und daß die Glasschmelze im Einschmelzgefäß (1) mittels Hochfrequenz beheizt wird.

10. verfahren nach einem der Ansprüche 6 bis 9, **dadurch gekennzeichnet, daß** die Verbindungsleitung (2) zwischen dem Einschmelzgefäß (1) und dem Läutergefäß (3) aus einem beheizbaren Platinrohr oder aus einer beheizbaren Steinrinne hergestellt ist.

11. Verfahren nach einem der Ansprüche 8 bis 10, **dadurch gekennzeichnet, daß** das Läutergefäß (3) aus einem Keramiktiegel besteht, und daß die Schmelze im Läutergefäß (3) mittels Hochfrequenz beheizt wird.

12. Verfahren nach einem der Anspruche 6 bis 11, **dadurch gekennzeichnet, daß** das Läutergefäß (3) aus einem Skulltiegel besteht, und daß die Schmelze im Läutergefäß (3) mittels Hochfrequenz beheizt wird.

13. Verfahren nach einem der Ansprüche 6 bis 12, **dadurch gekennzeichnet, daß** der Skulltiegel im Bodenbereich elektrisch kurzgeschlossen wird.

14. Verfahren nach einem der Ansprüche 6 bis 13, **dadurch gekennzeichnet, daß** die Schmelze in der Abkühlrinne (4) von der Läutertemperatur im Läutergefäß (3) auf 1500° C bis 1550° C - bei einem Platin-Abstehteil - bzw. auf 1500° C bis 1650° C - bei einem Abstehteil aus keramischemMaterial - abgekühlt wird.

15. Verfahren nach einem der Ansprüche 6 bis 4, **dadurch gekennzeichnet, daß** die zu läuternden Glasschmelzen frei von toxischen Läutermitteln wie As₂O₃ oder Sb₂O₃ sind.

## Claims

1. An apparatus for continuously melting down and refining inorganic compounds, especially glass and glass-ceramics;
1.1 with a melting vessel (1);
1.2 with a refining vessel (3) which is arranged as a skull crucible;
1.3 the refining vessel (3) is associated with an induction coil (5) which is used for injecting high-frequency energy into the content of the vessel and which encloses the walls of the refining vessel;
1.4 with a connecting line (2) which is used for transferring melt from the melting vessel (1) to the refining vessel, **characterized by** the following features:
1.5 in the floor area the connecting line (2) emerges from the floor area of the melting vessel (1) and enters the refining vessel from below through the floor (3.1) of the same, with the melting vessel (1) and the refining vessel (3) each being arranged as a separate vessel.

2. An apparatus according to claim 1, **characterized in that** the connecting line (2) emerges laterally from the floor area (1.1) of the melting vessel (1).

3. An apparatus according to claim 1 or 2, **characterized in that** a cooling channel (4) is provided downstream of the refining vessel (3).

4. An apparatus according to claim 3, **characterized in that** a stirring crucible (6) is provided downstream of the cooling channel (4).

5. An apparatus according to one of the claims 1 to 4, **characterized in that** the melting vessel (1) and/or the refining vessel (3) are arranged within a conductive shielding cage.

6. A method for operating an apparatus according to one of the claims 1 to 5, **characterized in that** the melt is supplied continuously from the melting vessel (1) from below through the floor to the refining vessel (3) and flows in the upper area from the refining vessel via a cooling channel (4) to a stirring crucible (6).

7. A method according to claim 6, **characterized in that** the melt level in the melting vessel (1), in the refining vessel (3), in the cooling channel (4) and in the stirring crucible (6) are at one and the same level in the manner of communicating pipes.

8. A method according to one of the claims 6 or 7, **characterized in that** the melting vessel (1) is made of ceramic brick material, of platinum or of a platinum alloy.

9. A method according to one of the claims 6 to 8, **characterized in that** the melting vessel (1) consists of a so-called skull crucible and that the glass melt is heated in the melting vessel (1) by means of high frequency.

10. A method according to one of the claims 6 to 9, **characterized in that** the connecting line (2) between the melting vessel (1) and the refining vessel (3) is made of a heatable platinum pipe or of a heatable brick channel.

11. A method according to one of the claims 6 to 10, **characterized in that** the refining vessel (3) consists of a ceramic crucible and that the melt is heated in the refining vessel (3) by means of high frequency.

12. A method according to one of the claims 6 to 11, **characterized in that** the refining vessel (3) consists of a skull crucible and that the melt in the refining vessel (3) is heated by means of high frequency.

13. A method according to one of the claims 6 to 12, **characterized in that** the skull crucible is electrically short-circuited in the floor region.

14. A method according to one of the claims 6 to 13, **characterized in that** the melt in the cooling channel (4) is cooled from the refining temperature in the refining vessel (3) to 1500°C to 1550°C in the case of a protruding part made of platinum or to 1500°C to 1650°C in the case of a protruding part made of a ceramic material.

15. A method according to one of the claims 6 to 14, **characterized in that** the glass melts to be refined are free from toxic refining agents such as As₂O₃ or Sb₂O₃.

## Revendications

1. Dispositif pour la fusion et l'affinage en continu de composés anorganiques, en particulier de verre ou de vitrocéramiques,
1.1 avec un récipient de fusion (1),
1.2 avec un récipient d'affinage (3) conformé comme un creuset à fond refroidi,
1.3 le récipient d'affinage (3) est associé à une bobine d'induction (5) servant à transmettre de l'énergie à haute fréquence au contenu du récipient et entourant la paroi du récipient d'affinage (3);
1.4 avec un conduit de communication (2) servant à faire passer la matière en fusion du récipient de fusion (1) au récipient d'affinage,
**caractérisé en ce que** :
1.5 le conduit de communication (2) sort du récipient de fusion (1) par le fond et pénètre dans le récipient d'affinage par le bas à travers le fond (3.1) de celui-ci, le récipient de fusion (1) et le récipient d'affinage (3) étant construits comme des récipients distincts.

2. Dispositif selon la revendication 1, **caractérisé en ce que** le conduit de communication (2) sort de la zone de fond (1.1) du récipient de fusion (1) par le côté.

3. Dispositif selon la revendication 1 ou 2, **caractérisé en ce que** le récipient d'affinage (3) est suivi d'une rigole de refroidissement (4).

4. Dispositif selon la revendication 3, **caractérisé en ce que** la rigole de refroidissement (4) est suivie d'un creuset d'agitation (6).

5. Dispositif selon l'un des revendications 1 à 4, **caractérisé en ce que** le récipient de fusion (1) et/ou le récipient d'affinage (3) sont disposés à l'intérieur d'une cage d'isolation conductrice.

6. Procédé de conduite d'un dispositif selon l'une des revendications 1 à 5, **caractérisé en ce que** la matière en fusion est amenée en continu du récipient de fusion (1) au récipient d'affinage (3) par dessous à travers le fond, et une rigole de refroidissement (4) s'écoule du récipient d'affinage dans la partie supérieure vers un creuset d'agitation (6).

7. Procédé selon la revendication 6, **caractérisé en ce que** le niveau de matière en fusion dans le récipient de fusion (1), le récipient d'affinage (3), la rigole de refroidissement (4) et le creuset d'agitation (6) se trouve à la même hauteur selon le principe des vases communicants.

8. Procédé selon l'une des revendications 6 ou 7, **caractérisé en ce que** le récipient de fusion (1) est fait de briques de céramiques, de platine ou d'un alliage de platine.

9. Procédé selon l'une des revendications 6 à 8, **caractérisé en ce que** le récipient de fusion (1) se compose d'un creuset à fond refroidi, et **en ce que** le verre en fusion dans le récipient de fusion (1) est chauffé par hautes fréquences.

10. Procédé selon l'une des revendications 6 à 9, **caractérisé en ce que** le conduit de communication (2) entre le récipient de fusion (1) et le récipient d'affinage (3) est fait d'un tube de platine pouvant être chauffé ou d'une rigole en briques pouvant être chauffée.

11. Procédé selon l'une des revendications 6 à 10, **caractérisé en ce que** le récipient d'affinage (3) est fait d'un creuset en céramique et **en ce que** la matière en fusion dans le récipient d'affinage (3) est chauffée par hautes fréquences.

12. Procédé selon l'une des revendications 6 à 11, **caractérisé en ce que** le récipient d'affinage (3) est fait d'un creuset à fond refroidi et **en ce que** la matière en fusion dans le récipient d'affinage (3) est chauffée par hautes fréquences.

13. Procédé selon l'une des revendications 6 à 12, **caractérisé en ce que** le creuset à fond refroidi est court-circuité électriquement au niveau du fond.

14. Procédé selon l'une des revendications 6 à 13, **caractérisé en ce que** la matière en fusion dans la rigole de refroidissement (4) est refroidie de la température d'affinage dans le récipient d'affinage (3) à 1500°C à 1550°C, si la partie de conditionnement est en platine, ou 1500°C à 1650°C, si la partie de conditionnement est en matériau céramique.

15. Procédé selon l'une des revendications 6 à 14, **caractérisé en ce que** les verres en fusion à affiner ne contiennent pas d'agents d'affinage toxiques tels que As₂O₃ ou Sb₂O₃.
